# NEUE EUROPÄISCHE PATENTSCHRIFT

(11) **EP 2 844 499 B2**
(45) Veröffentlichungstag und Bekanntmachung des Hinweises auf die Entscheidung über den Einspruch: **10.01.2024**
(45) Hinweis auf die Patenterteilung: 01.03.2017
(21) Anmeldenummer: 13712534.0
(22) Anmeldetag: 25.03.2013
(51) Int. Cl.: B60B 35/00, B60B 35/02, B60B 35/04, B60G 9/00, F16F 1/368

(54) **ACHSANBINDUNG**
AXLE ATTACHMENT
DISPOSITIF DE LIAISON D'ESSIEU

(30) Priorität: 30.04.2012 DE 102012207157
(43) Veröffentlichungstag der Anmeldung: 11.03.2015
(73) Patentinhaber: SAF-HOLLAND GmbH, 63856 Bessenbach (DE)
(72) Erfinder: HOCK, Helmut, 63856 Bessenbach (DE)
(74) Vertreter: Müller Schupfner & Partner Patent- und Rechtsanwaltspartnerschaft mbB
(86) Internationale Anmeldenummer: PCT/EP2013/056194
(87) Internationale Veröffentlichungsnummer: WO 2013/164139

(56) Entgegenhaltungen:
- WO-A1-2009/014423
- WO-A1-2010/059037
- WO-A1-2010/095924
- WO-A1-2014/142656
- DE-U1- 29 615 286
- GB-A- 184 139
- US-A- 1 517 855
- US-A- 3 251 608
- US-A- 3 434 707
- US-A- 3 844 579
- US-A1- 2011 227 308

## Beschreibung

Die vorliegende Erfindung betrifft eine Achsanbindung, insbesondere zum Einsatz in Nutzfahrzeugen.

Achsanbindungen sind aus dem Stand der Technik bekannt und betreffen in der Regel den Bereich, in welchem die Achse eines Kraft- oder Nutzfahrzeuges an dessen Fahrzeugrahmen direkt oder mittelbar, über beispielsweise einen Führungslenker, festgelegt ist. Verbreitet ist in diesem Zusammenhang die Ausführung der Achsanbindung mittels U-förmiger Befestigungselemente mit rundem Querschnitt, welche an ihren Enden jeweils Außengewinde aufweisen und die Achse gegen beispielsweise den Führungslenker oder eine Blattfedereinheit verspannen. Nachteilig bei diesen Befestigungselementen ist, dass die Berührungsfläche zwischen Achse und Befestigungselement, welche zu einem Kraftschluss der Achsanbindung beiträgt, sehr klein ist und es daher meist notwendig ist, die Achsanbindung mittels einer Schweißverbindung zu verstärken. Hierdurch steigt der Fertigungsaufwand der Achsanbindung und der lokale Temperatureintrag führt zu Materialspannungen, bzw. Materialeigenspannungen, die darüber hinaus die Festigkeit der zu verbindenden Komponenten beeinträchtigen. Weiterhin ist die Achsanbindung zu Zwecken der Wartung nicht demontierbar und der Aufwand bei der Handhabung der dadurch größeren Baugruppe steigt.

Die US 2011/0227308 A1 betrifft eine gattungsgemäße Achsanordnung mit Luftfeder zum Einsatz in Nutzfahrzeugen, insbesondere aufweisend einen Längslenker, und ein Herstellungsverfahren für einen Längslenker einer solchen Achsanordnung, wobei der Achslenker als Schmiedeteil ausgebildet ist und mittels einer Klemmverbindung an einem Achsrohr festgelegt ist.

Die DE 296 15 286 U1 betrifft eine Radachse für Nutzfahrzeuge, bei der ein Achskörper mit einem von der Kreisringform abweichenden Profilquerschnitt mittels einer Spannplatte und bügelförmig ausgebildeten Befestigungselementen gegenüber einem Längslenker des Fahrwerksystems eines Nutzfahrzeuges verspannt wird.

Es ist Aufgabe der vorliegenden Erfindung, eine Achsanbindung bereitzustellen, welche eine zuverlässige und einfach herzustellende Anbindung der Achse am Fahrwerk eines Fahrzeuges, insbesondere Nutzfahrzeuges, erlaubt und dabei die Nachteile des Standes der Technik vermeidet.

Diese Aufgabe wird gelöst mit einer Achsanbindung gemäß dem unabhängigen Anspruch 1. Weitere Vorteile und Merkmale der vorliegenden Erfindung ergeben sich aus den abhängigen Ansprüchen.

Erfindungsgemäß ist eine Achsanbindung, insbesondere für Nutzfahrzeuge, vorgesehen, welche ein Lenkerelement und ein Spannelement umfasst, wobei das Lenkerelement einen konkav gekrümmten, lenkerseitigen Anbindungsbereich und, an den lenkerseitigen Anbindungsbereich grenzend, einen lenkerseitigen Befestigungsbereich aufweist, wobei das Spannelement einen vorzugsweise konkav gekrümmten spannseitigen Anbindungsbereich, welcher dem lenkerseitigen Anbindungsbereich gegenüberliegend angeordnet ist, und einen spannseitigen Befestigungsbereich aufweist, wobei ein Befestigungselement vorgesehen ist, welches in je einem lenkerseitigen und einem gegenüberliegenden spannseitigen Befestigungsbereich eingreift und diese gegeneinander zwingt, um einen Achskörper kraftschlüssig an der Achsanbindung festzulegen. Das Lenkerelement ist bevorzugt der Führungslenker eines Fahrwerkes, welcher mit einem ersten Ende schwenkbar an beispielsweise einem Lagerbock befestigt ist. Vorzugsweise an einem, dem ersten Ende gegenüberliegenden, zweiten Ende wird das Lenkerelement von einem Federelement gestützt. Das Federelement kann vorzugsweise auch im Bereich zwischen dem ersten und dem zweiten Ende des Lenkerelements an diesem eingreifen. Das Lenkerelement weist einen lenkerseitigen Anbindungsbereich auf, welcher konkav gekrümmt ist. Die konkave Krümmung ist dabei bevorzugt um eine Achse ausgebildet, welche der Längsachse eines durch die Achsanbindung festzulegenden Achskörpers gleich ist, oder parallel zu dieser verläuft. Der lenkerseitige Anbindungsbereich ist, mit anderen Worten, bevorzugt ein Bereich des Lenkerelements, in welchem dieses eine bogenförmige Bahn um eine parallel zur Querachse des Fahrzeuges verlaufende Achse beschreibt. Der lenkerseitige Anbindungsbereich weist bevorzugt eine nach innen, d.h. zur Krümmungsachse der konkaven Krümmung hin, weisende Fläche auf, die ausgelegt ist, auf einem Achskörper zumindest bereichsweise zur Auflage gebracht zu werden. An den Anbindungsbereich grenzend, weist das Lenkerelement einen, bevorzugt zumindest zwei lenkerseitige Befestigungsbereiche auf. Bevorzugt geht der konkav gekrümmte, lenkerseitige Anbindungsbereich in einen, zumindest bereichsweise entgegengesetzt gekrümmten Bereich über, welcher wiederum in den lenkerseitigen Befestigungsbereich übergeht. Die Erstreckung des Anbindungsbereiches ist bevorzugt dadurch gekennzeichnet, dass in diesem Bereich das Lenkerelement an dem festzulegenden Achskörper aufliegt. Der lenkerseitige Befestigungsbereich ist insbesondere durch Mittel zur Aufnahme einer Kraft zur Festlegung eines Spannelements an dem Lenkerelement gekennzeichnet. Bevorzugt weist der lenkerseitige Befestigungsbereich Aussparungen, bzw. Bohrungen auf, in welchen Befestigungsmittel, wie beispielsweise Schrauben oder Bolzen, eingreifen können. Um einen Achskörper in den Anbindungsbereich des Lenkerelements zu pressen ist ein Spannelement vorgesehen, welches einen spannseitigen Anbindungsbereich und zumindest einen spannseitigen Befestigungsbereich aufweist. Der spannseitige Anbindungsbereich ist bevorzugt konkav gekrümmt, wobei seine Krümmungsachse bevorzugt parallel zur Krümmungsachse des lenkerseitigen Anbindungsbereiches angeordnet ist. Der spannseitige Anbindungsbereich ist dem lenkerseitigen Anbindungsbereich bevorzugt derart gegenüberliegend angeordnet, dass zwischen beiden Anbindungsbereichen ein Raum aufgespannt ist, in welchem ein Achskörper angeordnet werden kann. Das Spannelement weist erfindungsgemäß zumindest einen spannseitigen Befestigungsbereich auf, in dem bevorzugt das zuvor beschriebene Befestigungsmittel bzw. -element eingreift, um den spannseitigen Befestigungsbereich und damit das Spannelement gegen den das Lenkerelement zu zwingen. Bevorzugt weist der spannseitige Befestigungsbereich hierfür eine Aussparung auf, in welche bevorzugt ein als Schraube oder Bolzen ausgeführtes Befestigungselement einführbar ist. Bevorzugt weist der spannseitige Anbindungsbereich, ähnlich dem lenkerseitigen Anbindungsbereich, eine zumindest abschnittsweise zylinderförmige Innenfläche auf, welche an dem Achskörper zumindest teilweise zur Anlage bringbar ist. Besonderes bevorzugt weist das Spannelement an jeder Seite des spannseitigen Anbindungsbereiches je einen spannseitigen Befestigungsbereich auf, wobei über zumindest zwei Befestigungselemente das Spannelement gegen das Lenkerelement zwingbar ist und ein zwischen den Anbindungsbereichen angeordneter Achskörper am Lenkerelement festlegbar ist.

Bevorzugt sind der lenkerseitige Anbindungsbereich und/oder der spannseitige Anbindungsbereich zylinderförmig ausgebildet, wobei die Anbindungsbereiche vorzugsweise eine Erstreckung längs der Zylinderachse aufweisen, die in einem Verhältnis von 0,5 bis 3, bevorzugt 0,75 bis 2 und insbesondere bevorzugt ca. 0,9 bis 1,5 zu einem Krümmungsradius des lenkerseitigen Anbindungsbereiches steht. Die Zylinderachse ist in diesem Zusammenhang definiert als die Längsachse eines gedachten Zylinders, welcher von dem lenkerseitigen und dem spannseitigen Anbindungsbereich jeweils zumindest teilweise gebildet ist. Dabei bestimmt die Längserstreckung des jeweiligen Anbindungsbereiches bei einem gegebenen Krümmungsradius die Größe der Fläche, mit welcher der Anbindungsbereich den Achskörper kontaktieren kann. Je größer diese Kontaktfläche ist, desto größer wird auch die Festigkeit einer kraftschlüssigen, auf Reibung beruhenden Verbindung des jeweiligen Anbindungsbereiches. Der Krümmungsradius der Anbindungsbereiche hängt dabei insbesondere von den Außendimensionen des Achskörpers im Bereich der Anbindung ab, wobei eine größere, bzw. dickere Achse eines größeren Krümmungsradius des Anbindungsbereiches bedarf. Da eine größere Achse in den meisten Fällen auch größere Momente und Kräfte aufnimmt und überträgt, steigt auch die Anforderung an die Festigkeit der Achsanbindung und es ist insbesondere bevorzugt, mit zunehmender Dicke der Achse, bzw. mit zunehmendem Krümmungsradius auch die Erstreckung des Anbindungsbereiches, bzw. der Anbindungsbereiche längs der Zylinderachse größer auszulegen. Dabei stellen die Verhältnisse von 0,5 bis 3 die Grenzwerte dieser Dimensionierung dar, die nicht unter- bzw. überschritten werden sollten, um die Anbindung zur Aufnahme bestimmter Kräfte und Momente nicht unter- oder überzudimensionieren. Um die hohen Belastungen auf die Achsanbindung ertragen zu können, ist das Lenkerelement, und bevorzugt auch das Spannelement, aus einem Federstahl hergestellt, wobei der Federstahl durch eine geringe Neigung zum Sprödbruch, eine hohe Zugfestigkeit und eine hohe Elastizität, d.h. einen die plastische Verformung deutlich überwiegenden Anteil an elastischer Dehnung bei Zugbelastung ausgezeichnet ist.

Ferner bevorzugt weist der lenkerseitige Anbindungsbereich in einem ersten Zustand einen ersten Krümmungsradius auf und in einem zweiten Zustand einen zweiten Krümmungsradius, welcher kleiner ist als der erste Krümmungsradius. Der erste Zustand ist bevorzugt der Zustand, in dem das Lenkerelement nicht mit dem Spannelement verbunden ist, also der Zustand vor der Montage der Achsanbindung. In diesem Zustand weist der lenkerseitige Anbindungsbereich einen ersten Krümmungsradius auf, welcher vorteilhafterweise groß genug ist, um einen Achskörper ohne Aufwendung hoher Kräfte in den lenkerseitigen Anbindungsbereich einführen zu können. Durch die von den Befestigungselementen aufgebrachten Kräfte, die über die lenkerseitigen und die spannseitigen Befestigungsbereiche zwischen Spannelement und Lenkerelement etabliert werden, wird das Lenkerelement bevorzugt derart verformt, dass sich der Krümmungsradius des lenkerseitigen Anbindungsbereiches verkleinert. Der lenkerseitige Anbindungsbereich erreicht seinen zweiten Zustand mit einem zweiten Krümmungsradius, welcher kleiner ist als der erste Krümmungsradius. Der zweite Zustand des lenkerseitigen Anbindungsbereiches ist insbesondere bevorzugt der montierte Zustand der Achsanbindung, in welchem ein Achskörper zwischen Lenkerelement und Spannelement bevorzugt kraftschlüssig festgelegt ist. Für den weiterhin bevorzugten Fall, dass die Krümmung des lenkerseitigen Anbindungsbereiches nicht kreisförmig, sondern beispielsweise elliptisch oder polyedrisch verläuft, ist der Krümmungsradius als mittlerer Krümmungsradius zu verstehen.

Erfindungsgemäß beschreibt der lenkerseitige Anbindungsbereich einen Ellipsenoder Kreisbogen, der einen Bogenwinkel aufspannt, wobei in einem ersten Zustand des lenkerseitigen Anbindungsbereiches der erste Bogenwinkel bevorzugt 170° bis 195°, besonders bevorzugt 175° bis 185° und insbesondere bevorzugt ca. 178° bis 182° beträgt. Der erste Zustand des lenkerseitigen Anbindungsbereiches ist, wie zuvor beschrieben, bevorzugt der Zustand vor Montage der Achse. In diesem Zustand spannt der konkav gekrümmte, lenkerseitige Anbindungsbereich vorzugsweise einen Bogen mit einem ersten Bogenwinkel von ca. 180° auf.

Alternativ erfindungsgemäß weist der lenkerseitige Anbindungsbereich einen polyedrischen Abschnitt auf, der einen Bogenwinkel aufspannt, wobei in einem ersten Zustand des lenkerseitigen Anbindungsbereiches der erste Bogenwinkel bevorzugt 170° bis 195°, besonders bevorzugt 175° bis 185° und insbesondere bevorzugt ca. 178° bis 182°beträgt. Analog zu dem von einem kreisförmigen Abschnitt aufgespannten Bogen, wird auch durch einen bevorzugt polyedrisch ausgebildeten Abschnitt des lenkerseitigen Anbindungsbereiches ein Bogen aufgespannt. Mit Vorteil kann durch den bevorzugten Bogenwinkel das Klemmverhalten des Lenkerelements auf den jeweils festzulegenden Achskörper abgestimmt werden.

Erfindungsgemäß beträgt in einem zweiten Zustand des lenkerseitigen Anbindungsbereiches ein zweiter Bogenwinkel das 1,01- bis 1,5-fache, bevorzugt das 1,05- bis 1,3-fache und insbesondere das 1,1 bis 1,2-fache des ersten Bogenwinkels. Der zweite Zustand des lenkerseitigen Anbindungsbereiches ist bevorzugt dadurch gekennzeichnet, dass ein Achskörper an der Achsanbindung festgelegt ist. In diesem zweiten Zustand ist das Lenkerelement bevorzugt derart verformt, dass der vom lenkerseitigen Anbindungsbereich aufgespannte Bogenabschnitt einen zweiten Bogenwinkel aufweist, der größer ist als der erste Bogenwinkel. Für den Fall, dass der zweite Bogenwinkel größer als 180° ist, bildet der lenkerseitige Anbindungsbereich eine Hinterschneidung, welche vorteilhafterweise ein Herausgleiten des Achskörpers aus dem lenkerseitigen Anbindungsbereich verhindert. Die Obergrenze eines Bogenwinkelverhältnisses von 1,2, markiert dabei den maximalen Grad der Verformung, in welche das Lenkerelement höchstens gezwungen werden sollte, da bei höherer Verformung sowohl das Material des Lenkerelements stärker beansprucht wird, als auch die auf die Befestigungselemente wirkende Rückstellkraft des Lenkerelements steigt.

In bevorzugter Weise wirkt die von dem Befestigungselement aufgebrachte Kraft im zweiten Zustand des lenkerseitigen Anbindungsbereiches im Wesentlichen senkrecht zum zweiten Krümmungsradius des lenkerseitigen Anbindungsbereiches. Insbesondere bevorzugt sind die Befestigungsbereiche des Lenkerelements und des Spannelements derart angeordnet, dass im zweiten Zustand das Befestigungselement eine Kraft zwischen diesen Befestigungsbereichen etabliert, die bevorzugt im Wesentlichen parallel zur Tangente der Krümmung des lenkerseitigen, bzw. des spannseitigen Anbindungsbereiches wirkt. Mit anderen Worten wirkt die von dem Befestigungselement aufgebrachte Kraft bevorzugt als Zugkraft längs des Umfangs des Anbindungsbereiches.

Erfindungsgemäß weist das Spannelement an den Enden des spannseitigen Anbindungsbereiches einen Vor- und/oder Rücksprung auf, der in einen korrespondierenden Rück- und/oder Vorsprung des Lenkerelements formschlüssig eingreift. In einer ersten bevorzugten Ausführungsform weist das Spannelement einen oder eine Vielzahl von Vorsprüngen auf, welche bevorzugt, den Verlauf der Krümmungslinie des spannseitigen Anbindungsbereiches fortsetzend, in Richtung des lenkerseitigen Anbindungsbereiches von Spannelement abstehen. Das Lenkerelement weist in dieser Ausführungsform entsprechend korrespondierende Rücksprünge auf, welche bevorzugt in die Endkanten des lenkerseitigen Anbindungsbereiches eingebracht sind und in welchen die Vorsprünge des Spannelements eingreifen. Der bevorzugte formschlüssige Eingriff der Vorsprünge in die Rücksprünge sichert das Spannelement insbesondere gegen Verlagerung quer zur Krümmungslinie der Anbindungsbereiche. Alternativ bevorzugt weist das Lenkerelement einen oder eine Vielzahl von Vorsprüngen auf, welche in korrespondierenden Rücksprüngen am Spannelement formschlüssig eingreifen. Auch eine Kombination eines Vor- und eines Rücksprungs am Lenkerelement, welche in einem Rück- und einem Vorsprung am Spannelement eingreifen, kann bevorzugt zum Einsatz gelangen.

Insbesondere bevorzugt ist am Spannelement ein zumindest bereichsweise keilförmiger Vorsprung vorgesehen, welcher in einen zumindest bereichsweise keilförmig ausgebildeten Rücksprung am Lenkerelement bei einem Verspannen des Spannelements gegen das Lenkerelement gepresst wird, wobei der Vorsprung bevorzugt eine Kraft entlang des zweiten Krümmungsradius auf einen festzulegenden Achskörper ausübt. Bevorzugt ist der Vorsprung und/oder der korrespondierende Rücksprung mit einem, sich in Einführrichtung verjüngenden Querschnitt versehen. Beispielsweise kann eine Keilform oder eine Kegelform oder eine Halbkegelform bevorzugt sein. Insbesondere bevorzugt verklemmt sich der Vorsprung im zweiten Zustand der Achsanbindung zwischen dem Lenkerelement, bzw. bevorzugt zwischen dem im lenkerseitigen Anbindungsbereich vorgesehenen Rücksprung, und dem von der Achsanbindung aufgenommenen Achskörper. Auf diese Weise übt der Vorsprung eine lokal hohe Flächenpressung auf den Achskörper aus und sichert diesen kraftschlüssig gegen Verlagerung relativ zur Achsanbindung. Bevorzugt sind auch am Achskörper selbst Vor- und/oder Rücksprünge vorgesehen, welche mit den Vor- und/oder Rücksprüngen des Spannelements und/oder des Lenkerelements in formschlüssigen Eingriff bringbar sind und auf diese Weise den kraftschlüssigen Verbund des Achskörpers mit der Achsanbindung durch einen Formschluss unterstützen.

Vorzugsweise ist die dem Spannelement abgewandte Seite des lenkerseitigen Befestigungsbereiches konkav gekrümmt, wobei bevorzugt ein Adapterelement vorgesehen ist, welches mit einer abgerundeten Fläche auf dem lenkerseitigen Befestigungsbereich aufliegt und eine vom Befestigungselement aufgebrachte Kraft an den lenkerseitigen Befestigungsbereich überträgt. Das Adapterelement dient bevorzugt der Krafteinleitung der vom Befestigungselement aufgebrachten Kraft in je einen der Befestigungsbereiche unter Vermeidung von Spannungsspitzen. Hierzu weist das Adapterelement einen Eingriffsabschnitt, in welchen das Befestigungselement eingreift und eine gerundete Geometrie in dem Bereich, in welchem es am Befestigungsbereich des Lenkerelements oder des Spannelements zur Auflage gelangt. Der jeweils korrespondierende Befestigungsbereich, weist an seiner, dem Adapterelement zugewandten Seite ebenfalls eine bevorzugt gerundete Geometrie auf. Insbesondere bevorzugt kongruieren die Kontaktflächen des Adapterelements und des Befestigungsbereiches. Einfacher gesagt ist das Adapterelement bevorzugt ein halbzylinderförmiges Element, welches eine Bohrung für den Eingriff des Befestigungselements aufweist und welches mit seiner halbzylinderförmigen Mantelfläche auf dem Befestigungsbereich des Lenkerelements oder des Spannelements zur Auflage gelangt.

Bevorzugt weist das Spannelement vier spannseitige Befestigungsbereiche auf. Dabei kann es bevorzugt sein das je zwei der Befestigungsbereiche auf jeder Seite des spannseitigen Anbindungsbereiches vorgesehen sind. Bevorzugt wird das Spannelement somit an vier, im Wesentlichen gleichmäßig verteilten Punkten, durch bevorzugt vier Befestigungselemente am Lenkerelement festgelegt. Möglich ist auch die Festlegung über eine Vielzahl von Befestigungselementen je Befestigungsbereich.

Darüber hinaus ist es bevorzugt, dass das Spannelement stoffschlüssig an einem Achskörper festgelegt ist. Bevorzugt ist hierfür eine Schweißverbindung, eine Klebeverbindung oder eine Lötverbindung. Vorteilhafterweise kann das Spannelement auch einstückig mit dem Achskörper ausgebildet und hergestellt sein, wodurch sich der Montageaufwand und insbesondere die Zahl loser Teile verringert. Gleichzeitig ist ein Verrutschen des Achskörpers relativ zum Lenkerelement nicht mehr nur durch den Kraftschluss über den lenkerseitigen Anbindungsbereich verhindert, sondern auch durch den Stoffschluss des Spannelements mit dem Achskörper und dessen, über die Befestigungselemente hergestellter, mittelbar formschlüssiger Verbindung mit dem Lenkerelement.

Ferner bevorzugt ist wobei der lenkerseitige Anbindungsbereich zur Herstellung einer stoffschlüssigen Verbindung zwischen dem lenkerseitigen Anbindungsbereich und einem Achskörper ausgelegt. Zur weiteren Verstärkung der Verbindung des Achskörpers mit der Achsanbindung ist es bevorzugt, zwischen dem lenkerseitigen Anbindungsbereich und dem Achskörper einen Stoffschluss herzustellen. Besonders eignet sich hierfür eine Klebverbindung oder eine Lötverbindung. Der lenkerseitige Anbindungsbereich kann beispielsweise kleinere Rillen oder Kanäle aufweisen, welche die Verteilung eines zwischen Achskörper und lenkerseitigem Anbindungsbereich eingebrachten Lotes begünstigen. Weiterhin bevorzugt kann eine Schweißverbindung gewählt werden, die besonders bevorzugt als Punktschweißverbindung ausgeführt wird.

Weitere Vorteile und Merkmale der Erfindung ergeben sich aus der nachfolgenden Beschreibung bevorzugter Ausführungsformen der erfindungsgemäßen Achsanbindung mit Bezug auf die beigefügten Figuren. Einzelne Merkmale der verschiedenen Ausführungsformen können dabei im Rahmen der Erfindung miteinander kombiniert werden.

Es zeigen:
- Fig. 1: - Eine Ansicht einer bevorzugten Ausführungsform der erfindungsgemäßen Achsanbindung,
- Fig. 2: - eine Ansicht einer bevorzugten Ausführungsform des erfindungsgemäßen Spannelements,
- Fig. 3a) und 3b): - perspektivische Ansichten bevorzugter Ausführungsformen der erfindungsgemäßen Achsanbindung,
- Fig. 4: - eine Schnittansicht einer bevorzugten Ausführungsform mit Vorsprung und korrespondierendem Rücksprung,
- Fig. 5: - eine Ansicht einer bevorzugten Ausführungsform der erfindungsgemäßen Achsanbindung, und
- Fig. 6: - eine Ansicht einer nicht erfindungsgemäßen Achsanbindung.

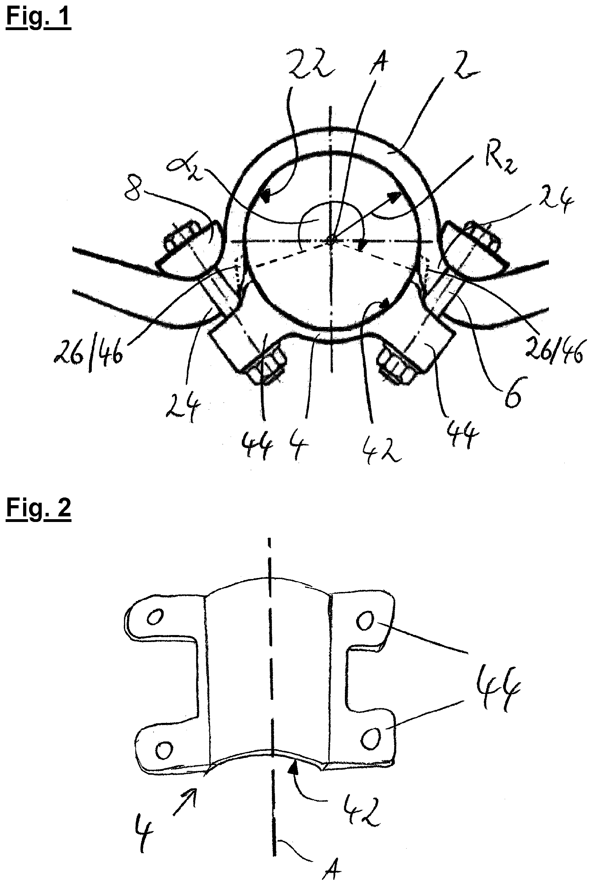

**Fig. 1** zeigt eine Ansicht einer bevorzugten Ausführungsform der erfindungsgemäßen Achsanbindung in Richtung einer bevorzugt parallel zur Querachse des Fahrzeuges verlaufenden Achse A. Mit anderen Worten blickt der Betrachter entlang der Haupterstreckungsrichtung einer durch die Achsanbindung festzulegenden Fahrzeugachse. Das Lenkerelement 2 weist einen lenkerseitigen Anbindungsbereich 22 und zwei, jeweils rechts und links des lenkerseitigen Anbindungsbereiches 22 angeordnete lenkerseitige Befestigungsbereiche 24 auf. Der lenkerseitige Anbindungsbereich 22 weist eine konkave Krümmung, besonders bevorzugt elliptisch oder kreisförmig um die Achse A verlaufend, auf. In der Figur ist der bevorzugte zweite Zustand des lenkerseitigen Anbindungsbereiches 22 gezeigt, wobei in diesem Zustand, das Spannelement 4 über eine Vielzahl von Befestigungselementen 6, vorzugsweise zwei Befestigungselementen 6, am Lenkerelement 2 festgelegt ist und den lenkerseitigen Anbindungsbereich 22 gegen einen, zwischen dem lenkerseitigen Anbindungsbereich 22 und dem spannseitigen Anbindungsbereich 42 angeordneten, Achskörper 10 zwingt. Dabei spannt die Krümmungslinie des lenkerseitigen Anbindungsbereiches 22 einen, bevorzugt kreisförmigen Bogen auf, wobei der Bogenwinkel α₂ bevorzugt größer als 180° ist. Beginn und Ende des Bogenwinkels α₂ sind in der Figur durch zwei radial verlaufende, gestrichelte Linien dargestellt. Die ebenfalls eingezeichnete, horizontal verlaufende Strich-Punkt-Linie verdeutlicht einen Bogenwinkel von 180°. Im dargestellten zweiten Zustand weist der lenkerseitige Anbindungsbereich 22 bevorzugt einen mittleren Krümmungsradius R₂ auf, wobei dieser Krümmungsradius R₂ besonders bevorzugt dem Radius des Verbindungsbereiches eines an der Achsanbindung festzulegenden Achskörpers 10 entspricht. Die lenkerseitigen Befestigungsbereiche 24 weisen eine nach oben hin konkav gekrümmte Geometrie auf, wobei jeweils Adapterelemente 8 vorgesehen sind, um die von den Befestigungsmitteln 6 aufgebrachte Kraft möglichst unter Vermeidung von Spannungsspitzen in die lenkerseitigen Befestigungsbereich 24 zu übertragen. Zu diesem Zweck weisen die Adapterelemente 8 eine gerundete Außengeometrie auf, welche einen günstigen Kraftfluss von Befestigungselement 6, über das Adapterelement 8 hin zum jeweiligen lenkerseitigen Befestigungsbereich 24 ermöglichen. Erfindungsgemäß weisen das Lenkerelement 2 und das Spannelement 4 Vor- und/oder Rücksprünge 26, 46 auf, die miteinander korrespondieren und eine Verlagerung des Spannelements 4 relativ zum Lenkerelement 2 längs der Achse A verhindern.

**Fig. 2** zeigt eine Ansicht einer bevorzugten Ausführungsform des erfindungsgemäßen Spannelements 4, wobei bevorzugt vier spannseitige Befestigungsbereiche 44 vorgesehen sind. Jeder der spannseitigen Befestigungsbereiche 44 weist bevorzugt eine Bohrung auf, in welcher ein Befestigungselement 6 eingreifen kann. Bevorzugt sind darüber hinaus auch 2 bis 8, besonders bevorzugt 4 Bohrungen pro Befestigungsbereich 44, vorgesehen, in welchen die entsprechende Anzahl an Befestigungselementen 6 in Eingriff bringbar ist. Weiterhin ist bei dieser Ausführungsform ein bevorzugtes Verhältnis der Erstreckung des spannseitigen Anbindungsbereiches 42 längs der Achse A zum Krümmungsradius des spannseitigen Anbindungsbereiches 42 von ca. 2 gezeigt. Analog hierzu kann dieses Verhältnis für einen korrespondierenden lenkerseitigen Anbindungsbereich 22 bestimmt werden.

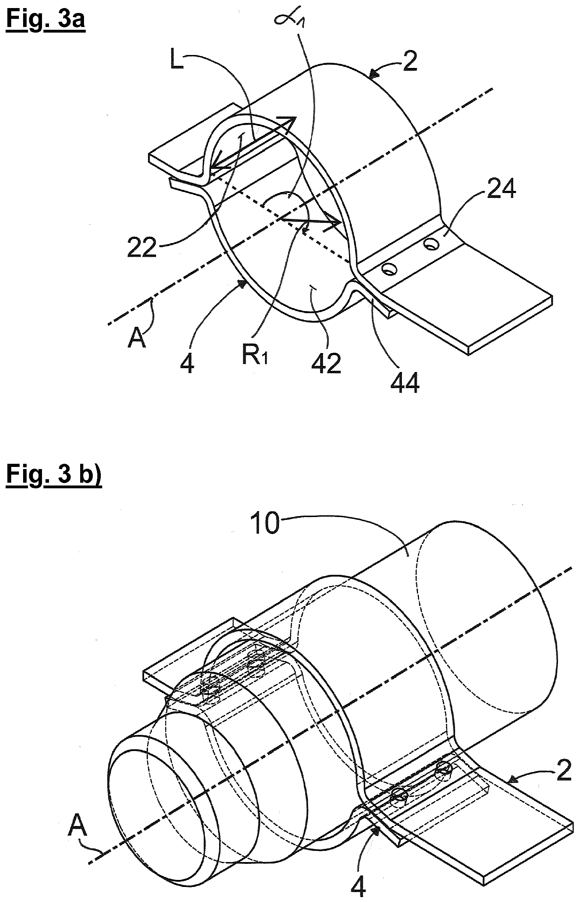

**Fig. 3a****)** zeigt eine perspektivische Ansicht einer bevorzugten Ausführungsform der erfindungsgemäßen Achsanbindung im ersten Zustand. Dieser Zustand ist bevorzugt dadurch gekennzeichnet, dass der lenkerseitige Anbindungsbereich 22 nicht durch das Spannelement 4 gegen einen Achskörper 10 gezwungen ist. In diesem Zustand weist der lenkerseitige Anbindungsbereich 22 bevorzugt einen mittleren Krümmungsradius R₁ auf, wobei dieser Krümmungsradius R₁ bevorzugt größer ist als der Krümmungsradius R₂ im zweiten Zustand. Bevorzugt, wie in dieser Ansicht zu erkennen, ist das Lenkerelement 2 ein flacher Körper, der bevorzugt bandförmig ausgebildet ist und im Bereich des lenkerseitigen Anbindungsbereiches 22 einen halbzylinderähnlichen Abschnitt, mit der Achse A als Zylinderachse, aufweist. Der lenkerseitige Anbindungsbereich 22 weist bevorzugt eine Erstreckung L längs der Achse A auf die in einem Verhältnis von 0,5 bis 3, bevorzugt 0,75 bis 2 und insbesondere bevorzugt ca. 0,9 bis 1,5 zum Krümmungsradius R₁ des lenkerseitigen Anbindungsbereiches 22 steht. Der Bogenwinkel α₁ ist bevorzugt der Winkel, den der lenkerseitige Anbindungsbereich 22 in seinem ersten Zustand, d. h. während das Lenkerelement 2 nicht durch das Spannelement 4 verformt ist, aufspannt. In der Figur ist ein bevorzugter Bogenwinkel α₁ von ca. 180° gezeigt.

**Fig. 3b****)** zeigt eine perspektivische Ansicht der bereits in Fig. 3a) gezeigten, bevorzugten Ausführungsform, wobei der bevorzugt in die Achsanbindung eingeschobene Achskörper 10 gezeigt ist. Bevorzugt ist der Achskörper 10 ein sich zylindrisch, besonders bevorzugt kreiszylindrisch, entlang der Achse A erstreckender Körper, beispielsweise die Achse eines Nutzfahrzeugs. Dargestellt ist weiterhin, dass die Achsanbindung, insbesondere der lenkerseitige Anbindungsbereich 22 in seinem ersten Zustand, gegenüber der Mantelfläche des Achskörpers 10 ein Übermaß aufweist.

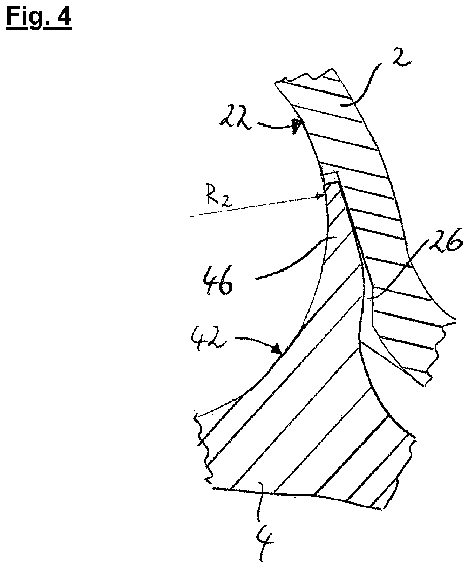

**Fig. 4** zeigt eine Schnittansicht einer bevorzugten Ausführungsform eines am Spannelement 4 vorgesehenen Vorsprunges 46, welcher in einen, am Lenkerelement 2 vorgesehenen Rücksprung 26 eingreift. Der Vorsprung 46 und der korrespondierende Rücksprung weisen einen bevorzugt abschnittsweise keilförmigen Querschnitt auf, so dass, je tiefer der Vorsprung 46 in den Rücksprung 26 gepresst wird, der Vorsprung 46 längs des Krümmungsradius' R₂, bevorzugt gegen einen festzulegenden Achskörper 10 gepresst wird.

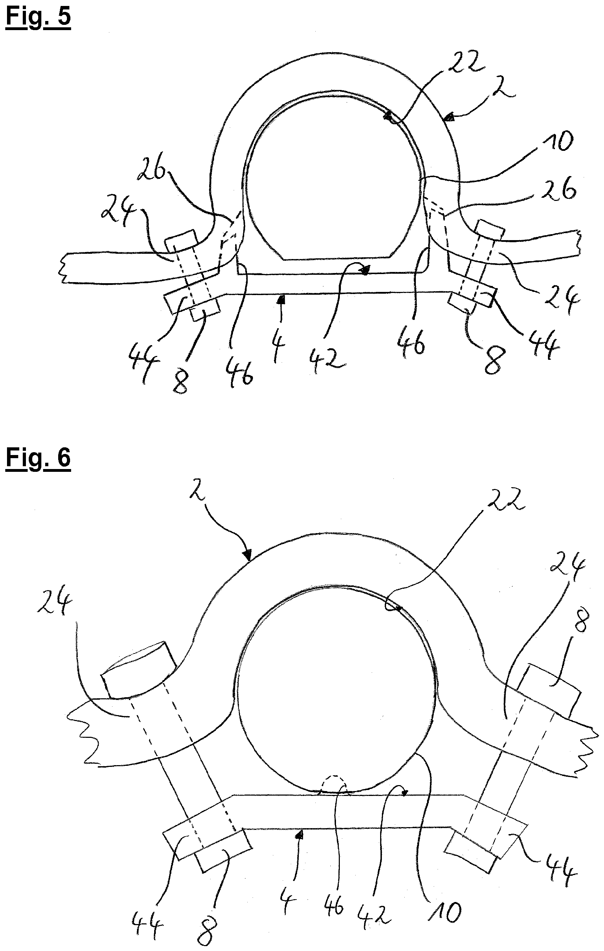

**Fig. 5** zeigt eine weitere bevorzugte Ausführungsform der Achsanbindung, wobei das Spannelement 4 vorzugsweise einen im Wesentlichen planar, bzw. eben ausgebildeten spannseitigen Anbindungsbereich 42 aufweist. Weiterhin weist das Spannelement 4 vorzugsweise an den Anbindungsbereich 42 angrenzend zwei Vorsprünge 46 auf, welche dafür vorgesehen sind mit korrespondierenden Rücksprüngen 26 am Lenkerelement 2 in formschlüssigen Eingriff gebracht zu werden. Vorzugsweise ist das Spannelement 4 dafür ausgelegt mit dem Achskörper 10 derart in Formschluss zu treten, dass der Achskörper 10 gegenüber dem Lenkerelement 2 und dem Spannelement 4 nicht nur gegen Verlagerung, sondern auch gegen Verdrehung gesichert ist. Dies kann bevorzugt durch die dargestellte planare Ausbildung des spannseitigen Anbindungsbereiches 42 in Kombination mit einer teilweise planar ausgebildeten Geometrie des Achskörpers 10 erreicht werden. Vorzugsweise weist der Achskörper 10 einen lokalen, planar ausgebildeten Abschnitt auf, welcher mit dem Spannelement 4 in Eingriff gelangt.

**Fig. 6** zeigt eine Ausführungsform einer nicht erfindungsgemäßen Achsanbindung, wobei der spannseitige Anbindungsabschnitt 42 im Wesentlichen planar ausgebildet ist und dabei vorzugsweise einen Vorsprung 46 aufweist, welcher mit dem Achskörper 10 in formschlüssigen Eingriff bringbar ist. Hierzu weist der Achskörper 10 vorzugsweise einen lokalen Rücksprung auf, in welchen der Vorsprung 46 des Spannelements 4 eingreifen kann um den Achskörper 10 gegen Verdrehung um seine Längsachse zu sichern. Es versteht sich, dass alternativ oder weiterhin bevorzugt der Achskörper 10 einen Vorsprung aufweisen kann, welcher in einen Rücksprung 46 (nicht gezeigt) des Spannelements 4 eingreifen kann. Der Vor- oder Rücksprung (46) ist vorzugsweise keilförmig ausgebildet und kann dabei besonders bevorzugt eine abgerundete Spitze, bzw. Oberkante aufweisen, wie in Fig. 6 dargestellt.

### Bezugszeichenliste:

- 2: - Lenkerelement
- 4: - Spannelement
- 6: - Befestigungselement
- 8: - Adapterelement
- 10: - Achskörper
- 22: - lenkerseitiger Anbindungsbereich
- 24: - lenkerseitiger Befestigungsbereich
- 26: - Vor- oder Rücksprung
- 42: - spannseitiger Anbindungsbereich
- 44: - spannseitiger Befestigungsbereich
- 46: - Vor- oder Rücksprung
- A: - Achse
- α₁: - Bogenwinkel im ersten Zustand
- α₂: - Bogenwinkel im zweiten Zustand
- L: - Erstreckung
- R₁: - Krümmungsradius im ersten Zustand
- R₂: - Krümmungsradius im zweiten Zustand

## Patentansprüche

1. Achsanbindung, insbesondere für Nutzfahrzeuge, umfassend ein Lenkerelement (2) und ein Spannelement (4),
wobei das Lenkerelement (2) einen konkav gekrümmten lenkerseitigen Anbindungsbereich (22) und, an den lenkerseitigen Anbindungsbereich (22) grenzend, einen lenkerseitigen Befestigungsbereich (24) aufweist,
wobei das Spannelement (4) einen spannseitigen Anbindungsbereich (42), welcher dem lenkerseitigen Anbindungsbereich (22) gegenüberliegend angeordnet ist, und einen spannseitigen Befestigungsbereich (44) aufweist, wobei ein Befestigungselement (6) vorgesehen ist, welches in je einem lenkerseitigen und einem gegenüberliegenden spannseitigen Befestigungsbereich (24, 44) eingreift und diese gegeneinander zwingt, um einen Achskörper (10) kraftschlüssig an der Achsanbindung festzulegen,
wobei der lenkerseitige Anbindungsbereich (22) einen Ellipsen- oder Kreisbogen beschreibt, der in einem ersten Zustand des lenkerseitigen Anbindungsbereiches (22) einen ersten Bogenwinkel (α₁) aufspannt,
oder
wobei der lenkerseitige Anbindungsbereich (22) einen polyedrischen Abschnitt aufweist, der in einem ersten Zustand des lenkerseitigen Anbindungsbereiches (22) einen ersten Bogenwinkel (α₁) aufspannt,
**dadurch gekennzeichnet, dass** in einem zweiten Zustand des lenkerseitigen Anbindungsbereiches (22) ein zweiter Bogenwinkel (α₂) das 1,01- bis 1,5-fache des ersten Bogenwinkels (α₁) beträgt,
wobei das Spannelement (4) an den Enden des spannseitigen Anbindungsbereiches (42) einen Vor- und/oder Rücksprung (46) aufweist, der in einen korrespondierenden Rück- und/oder Vorsprung (26) des Lenkerelements (2) formschlüssig eingreift.

2. Achsanbindung nach Anspruche 1,
wobei der lenkerseitige Anbindungsbereich (22) und/oder der spannseitige Anbindungsbereich (42) zylinderförmig ausgebildet sind, und
wobei die Anbindungsbereiche (22, 42) vorzugsweise eine Erstreckung (L) längs der Zylinderachse aufweisen, die in einem Verhältnis von 0,5 bis 3, bevorzugt 0,75 bis 2 und insbesondere bevorzugt ca. 0,9 bis 1,5 zu einem Krümmungsradius des lenkerseitigen Anbindungsbereiches (22) steht.

3. Achsanbindung nach einem der vorhergehenden Ansprüche, wobei der lenkerseitige Anbindungsbereich (22) in einem ersten Zustand einen ersten Krümmungsradius (R₁) aufweist, und in einem zweiten Zustand einen zweiten Krümmungsradius (R₂) aufweist, welcher kleiner ist als der erste Krümmungsradius (R₁).

4. Achsanbindung nach einem der vorhergehenden Ansprüche,
wobei im ersten Zustand des lenkerseitigen Anbindungsbereiches (22) der erste Bogenwinkel (α₁) 170° bis 195°, bevorzugt 175° bis 185° und insbesondere bevorzugt ca. 178° bis 182°beträgt.

5. Achsanbindung nach einem der vorhergehenden Ansprüche,
wobei im zweiten Zustand des lenkerseitigen Anbindungsbereiches (22) der zweite Bogenwinkel (α₂) das 1,05- bis 1,3-fache und bevorzugt das 1,1 bis 1,2-fache des ersten Bogenwinkels (α₁) beträgt.

6. Achsanbindung nach einem der vorhergehenden Ansprüche,
wobei die von dem Befestigungselement (6) aufgebrachte Kraft im zweiten Zustand des lenkerseitigen Anbindungsbereiches (22) im Wesentlichen senkrecht zum zweiten Krümmungsradius des lenkerseitigen Anbindungsbereiches (22) wirkt.

7. Achsanbindung nach einem der vorhergehenden Ansprüche,
wobei am Spannelement (4) ein zumindest bereichsweise keilförmiger Vorsprung (46) vorgesehen ist, welcher in einen zumindest bereichsweise keilförmig ausgebildeten Rücksprung (26) am Lenkerelement (2) bei einem Verspannen des Spannelements (4) gegen das Lenkerelement (2) eingepresst wird, so dass der Vorsprung (46) bevorzugt eine Kraft entlang des zweiten Krümmungsradius' (R₂) auf einen festzulegenden Achskörper (10) ausübt.

8. Achsanbindung nach einem der vorhergehenden Ansprüche,
wobei am Spannelement (4) ein Vorsprung (46) vorgesehen ist, welcher mit einem Achskörper (10) in formschlüssigen Eingriff bringbar ist, um den Achskörper (10) gegen Verdrehung relativ zum Spannelement (4) zu sichern.

9. Achsanbindung nach einem der vorhergehenden Ansprüche, wobei die dem Spannelement (4) abgewandte Seite des lenkerseitigen Befestigungsbereiches (24) konkav gekrümmt ist, und
wobei bevorzugt ein Adapterelement (8) vorgesehen ist, welches mit einer abgerundeten Fläche auf dem lenkerseitigen Befestigungsbereich (24) aufliegt und eine vom Befestigungselement (6) aufgebrachte Kraft an den lenkerseitigen Befestigungsbereich (24) überträgt.

10. Achsanbindung nach einem der vorhergehenden Ansprüche,
wobei das Spannelement (4) vier spannseitige Befestigungsbereiche (44) aufweist.

11. Achsanbindung nach einem der vorhergehenden Ansprüche,
wobei das Spannelement (4) stoffschlüssig an einem Achskörper (10) festlegbar ist.

12. Achsanbindung nach einem der vorhergehenden Ansprüche,
wobei der lenkerseitige Anbindungsbereich (22) zur Herstellung einer stoffschlüssigen Verbindung zwischen dem lenkerseitigen Anbindungsbereich (22) und einem Achskörper (10) ausgelegt ist.

## Claims

1. Axle connection, in particular for commercial vehicles, comprising a handlebar element (2) and a tensioning element (4),
wherein the handlebar element (2) has a concavely curved handlebar-side connection region (22) and, adjoining the handlebar-side connection region (22), a handlebar-side fastening region (24),
wherein the tensioning element (4) has a tensioning-side connection region (42), which is arranged opposite the handlebar-side connection region (22), and a tensioning-side fastening region (44),
wherein a fastening element (6) is provided, which engages in each of a handlebar-side and an opposite tensioning-side fastening region (24, 44) and forces them against each other in order to secure an axle beam (10) non-positively to the axle connection,
wherein the handlebar-side connection region (22) describes an elliptical or circular arc which, in a first state of the handlebar-side connection region (22), spans a first arc angle (α₁),
or
wherein the handlebar-side connection region (22) has a polyhedral section which, in a first state of the handlebar-side connection region (22), spans a first arc angle (α₁),
**characterized in that**, in a second state of the handlebar-side connection region (22), a second arc angle (α₂) is 1.01 to 1.5 times the first arc angle (α₁), wherein the tensioning element (4) has a projection and/or recess (46) at the ends of the tensioning-side connection region (42), which engages positively in a corresponding recess and/or projection (26) of the handlebar element (2).

2. Axle connection according to claim 1,
wherein the handlebar-side connection region (22) and/or the tensioning-side connection region (42) are cylindrical in shape, and
wherein the connection regions (22, 42) preferably have an extension (L) along the cylinder axis which is in a ratio of 0.5 to 3, preferably 0.75 to 2 and in particular preferably approximately 0.9 to 1.5 to a radius of curvature of the handlebar-side connection region (22).

3. Axle connection according to one of the preceding claims,
wherein the handlebar-side connection region (22) has a first radius of curvature (R₁) in a first state, and has a second radius of curvature (R₂) in a second state, which is smaller than the first radius of curvature (R₁).

4. Axle connection according to one of the preceding claims,
wherein in the first state of the handlebar-side connection region (22), the first arc angle (α₁) is 170° to 195°, preferably 175° to 185° and in particular preferably approx. 178° to 182°.

5. Axle connection according to one of the preceding claims,
wherein in the second state of the handlebar-side connection region (22), the second arc angle (α₂) is 1.05 to 1.3 times and preferably 1.1 to 1.2 times the first arc angle (α₁).

6. Axle connection according to one of the preceding claims,
wherein the force applied by the fastening element (6) in the second state of the handlebar-side connection region (22) acts substantially perpendicular to the second radius of curvature of the handlebar-side connection region (22).

7. Axle connection according to one of the preceding claims,
wherein a wedge-shaped projection (46) is provided on the tensioning element (4), which projection is pressed into a recess (26) on the handlebar element (2), which recess is at least partially wedge-shaped, when the tensioning element (4) is tensioned against the handlebar element (2), so that the projection (46) preferably exerts a force along the second radius of curvature (R₂) on an axle beam (10) to be fixed.

8. Axle connection according to one of the preceding claims,
wherein a projection (46) is provided on the tensioning element (4), which projection can be brought into positive engagement with an axle beam (10) in order to secure the axle beam (10) against rotation relative to the tensioning element (4).

9. Axle connection according to one of the preceding claims,
wherein the side of the handlebar-side fastening region (24) facing away from the tensioning element (4) is concavely curved, and
wherein an adapter element (8) is preferably provided, which rests with a rounded surface on the handlebar-side fastening region (24) and transmits a force applied by the fastening element (6) to the handlebar-side fastening region (24).

10. Axle connection according to one of the preceding claims,
wherein the tensioning element (4) has four tensioning-side fastening regions (44).

11. Axle connection according to one of the preceding claims,
wherein the tensioning element (4) can be fixed to an axle beam (10) in a material-locking manner.

12. Axle connection according to one of the preceding claims,
wherein the handlebar-side connection region (22) is designed to produce a material-locking connection between the handlebar-side connection region (22) and an axle beam (10).

## Revendications

1. Dispositif de liaison d'essieu, en particulier pour véhicules utilitaires, comprenant un élément formant bras (2) et un élément de serrage (4), dans lequel
l'élément formant bras (2) comprend une zone de liaison (22) côté bras, courbée concave, et une zone de fixation (24) côté bras, adjacente à la zone de liaison (22) côté bras,
l'élément de serrage (4) comprend une zone de liaison (42) côté serrage, agencée à l'opposé de la zone de liaison (22) côté bras, et une zone de fixation (44) côté serrage,
il est prévu un élément de fixation (6) qui vient s'engager respectivement dans une zone de fixation côté bras et dans une zone de fixation opposée côté serrage (24, 44), et qui les force l'une contre l'autre afin d'immobiliser un corps d'essieu (10) par coopération de forces sur le dispositif de liaison d'essieu,
la zone de liaison (22) côté bras décrit un arc elliptique ou circulaire qui définit un premier angle d'arc (α₁) dans un premier état de la zone de liaison (22) côté bras,
ou
la zone de liaison (22) côté bras présente une portion polyédrique qui définit un premier angle d'arc (α₁) dans un premier état de la zone de liaison (22) côté bras,
**caractérisé en ce que**, dans un second état de la zone de liaison (22) côté bras, un second angle d'arc (α₂) s'élève à 1,01 à 1,5 fois le premier angle d'arc (α₁),
l'élément de serrage (4) présente, aux extrémités de la zone de liaison (42) côté serrage, une saillie et/ou un retrait (46) qui vient s'engager par coopération de formes dans un retrait et/ou une saillie (26) correspondant(e) de l'élément formant bras (2).

2. Dispositif de liaison d'essieu selon la revendication 1,
dans lequel la zone de liaison (22) côté bras et/ou la zone de liaison (42) côté serrage sont réalisées en forme de cylindre, et
les zones de liaison (22, 42) présentent de préférence une extension (L) le long de l'axe du cylindre, qui est dans un rapport de 0,5 à 3 fois, de préférence de 0,75 à 2 fois, et de préférence particulière d'environ 0,9 à 1,5 fois le rayon de courbure de la zone de liaison (22) côté bras.

3. Dispositif de liaison d'essieu selon l'une des revendications précédentes, dans lequel la zone de liaison (22) côté bras présente, dans un premier état, un premier rayon de courbure (R₁) et, dans un second état, un second rayon de courbure (R₂) qui est inférieur au premier rayon de courbure (R₁).

4. Dispositif de liaison d'essieu selon l'une des revendications précédentes, dans lequel, dans le premier état de la zone de liaison (22) côté bras, le premier angle d'arc (α₁) est de 170° à 195°, de préférence de 175° à 185°, et préférence particulière d'environ 178° à 182°.

5. Dispositif de liaison d'essieu selon l'une des revendications précédentes, dans lequel, dans le second état de la zone de liaison (22) côté bras, un second angle d'arc (α₂) s'élève à 1,05 à 1,3 fois, de préférence 1,1 à 1,2 fois le premier angle d'arc (α₁).

6. Dispositif de liaison d'essieu selon l'une des revendications précédentes, dans lequel la force fournie par l'élément de fixation (6) agit, dans le second état de la zone de liaison (22) côté bras, sensiblement perpendiculairement au second rayon de courbure de la zone de liaison (22) côté bras.

7. Dispositif de liaison d'essieu selon l'une des revendications précédentes, dans lequel une saillie (46) au moins localement en forme de coin est prévue sur l'élément de serrage (4), laquelle est enfoncée dans un retrait (26) réalisé au moins localement en forme de coin sur l'élément formant bras (2), lors d'un serrage de l'élément de serrage (4) contre l'élément formant bras (2), de sorte que la saillie (46) exerce de préférence une force le long du second rayon de courbure (R₂) sur un corps d'essieu (10) à immobiliser.

8. Dispositif de liaison d'essieu selon l'une des revendications précédentes, dans lequel une saillie (46) est prévue sur l'élément de serrage (4), laquelle peut être amenée en engagement par coopération de formes avec un corps d'essieu (10), afin de bloquer le corps d'essieu (10) à l'encontre d'une rotation par rapport à l'élément de serrage (4).

9. Dispositif de liaison d'essieu selon l'une des revendications précédentes, dans lequel la face de la zone de fixation (24) côté bras détournée de l'élément de serrage (4) est courbée concave, et
de préférence, il est prévu un élément adaptateur (8) qui repose par une surface arrondie sur la zone de fixation (24) côté bras et qui transmet une force, fournie par l'élément de fixation (6), à la zone de fixation (24) côté bras.

10. Dispositif de liaison d'essieu selon l'une des revendications précédentes, dans lequel l'élément de serrage (4) comprend quatre zones de fixation (44) côté serrage.

11. Dispositif de liaison d'essieu selon l'une des revendications précédentes, dans lequel l'élément de serrage (4) est susceptible d'être immobilisé par coopération de matières sur un corps d'essieu (10).

12. Dispositif de liaison d'essieu selon l'une des revendications précédentes, dans lequel la zone de liaison (22) côté bras est conçue pour établir une liaison par coopération de matières entre la zone de liaison (22) côté bras et un corps d'essieu (10).
